# EUROPEAN PATENT APPLICATION

(11) **EP 1 514 746 A1**
(43) Date of publication of application: **16.03.2005**
(21) Application number: 03736043.5
(22) Date of filing: 05.06.2003
(51) Int. Cl.: B60R 21/26

(54) **INFLATOR**

(30) Priority: 17.06.2002 JP 2002175926
(71) Applicant: Daicel Chemical Industries, Ltd., Sakai-shi, Osaka 590-8501 (JP)
(72) Inventor: YAMAZAKI, Masayuki, Himeji-shi, Hyogo 671-1262 (JP)
(74) Representative: Grünecker, Kinkeldey, Stockmair & Schwanhäusser Anwaltssozietät
(86) International application number: PCT/JP2003/007152
(87) International publication number: WO 2003/106229

(57) **Abstract**

The present invention provides an inflator which has a sufficient operation performance and secures an operation reliability and operation safety and is manufactured easily.

There is provided an inflator provided with a first passage for guiding activation energy of an igniter and a second passage for guiding a pressurized medium to a gas discharging port defined inside and outside two retainers having a cylindrical peripheral wall portion, in which the ruptureble plate sealing the pressurized medium space is held by two retainers disposed axially adjacent to each other.

## Description

### Technical Field in which the Invention belongs

The present invention relates to an inflator for inflating type safety system of a vehicle, and in particular, to an inflator which can securely discharge a gas for inflating an air bag and does not complicate its structure, and in which a gas to be discharged is clean without substantially containing a combustion residue.

### Background Art

With the development of an inflator for an inflating-type safety system of motor vehicles, a hybrid inflator using both a pressurized gas and a gas generating agent has been attracting attention, and this hybrid inflator inflates an air bag by opening a sealed state of the pressurized gas to discharge the pressurized gas.

Such an inflating-type safety system of vehicles is required to activate securely as needed, and naturally, an inflator used therein is also required to activate reliably.

In particular, in an inflator using a pressurized gas, it is necessary to securely activate a mechanism for opening a sealed state of the pressurized gas charged in an interior of a housing in order to assure its operation reliability. In many cases, a rupturable plate is used as sealing means for a pressurized gas, and the sealed state is opened by rupturing the rupturable plate. Then, a pressure in a pressurized gas accommodating chamber raised by a flame (or heat, hereinafter, used in the same manner) or a gas generated by combustion of a solid gas generating agent, breaking of a sealing member by a projectile or the like, or an impact wave, a flame, a gas or the like generated at a time of activation of an igniter is ordinarily used for rupturing the rupturable plate. Among them, it is particularly desirable to use an impact wave, a flame, a gas or the like generated at a time of activation of an igniter for reducing weight of an inflator as a simple constitution, and there are conventionally various proposals.

For example, a technique in which an inlet for guiding a combustion product (an impact wave, a flame, a gas or the like) generated by activation of an igniter into the interior of a pressurized medium accommodating chamber and an outlet for guiding a pressurized gas in the pressurized medium accommodating chamber to a gas discharging port are covered with a single rupturable plate and the rupturable plate is ruptured by activation of an igniter is disclosed in US-B No. 6, 217, 065. And the embodiment thereof describes a state in which a rupturable plate is deformed to bulge towards the igniter by receiving a pressure of the pressurized medium before activation. However, in the art disclosed in this document, only a peripheral portion of the rupturable plate is fixed by welding, a welding radius becomes necessarily large. As a result, there occurs such a case that, even if the igniter is activated, the rupturable plate is not ruptured but only changed its original shape (the shape bulging toward the igniter) to be bulged or deformed toward the opposite direction (to the opposite side to the igniter), being divided based on the welded portion.

Further, US-B No. 6,062,599 discloses the art in which an inlet and an outlet to a pressurized gas chamber are covered with a single rupturable plate as in the case of USP No. 6, 217, 065 and combinations of welding the rupturable plate at two portions and fixing the same, and welding only a peripheral portion of the rupturable plate to form a fragile portion is included. Every art disclosed in this document contributes to rupturing of the rupturable plate, but working cost is increased since an extra welding step is required and it is necessary to provide the fragile portion in the rupturable plate.

In the inflator using the pressurized gas, it is desirable to discharge a gas efficiently in order to inflate an air bag rapidly at a time of activation, and therefore it is important that an interior structure of a housing is designed to obtain an efficient gas flow in the housing. Particularly, in a hybrid inflator using a flame or a gas generated by combustion of a solid gas generating agent, it is important to obtain an effective gas flow in view of efficiently using a flame or a gas generated by combustion of the gas generator.

Further, since a gas generated by combustion of the gas generating agent at a time of activation of the hybrid inflator has a high temperature, desirably, the hybrid inflator is formed such that a gas generated by combustion of the gas generating agent is not discharged directly, for improving a safety at activation. Then, a solid combustion product (combustion residue) generated by combustion of the gas generating agent has also a high temperature and there is a concern that an air bag (a bag body) may be damaged when the gas is discharged directly, and therefore, it is desirable that such a combustion residue is prevented from directly flowing out of the housing with a flow of an operating gas for inflating an air bag. In other words, desirably, a gas to be discharged outside the housing is clean, including little residue.

Since an inflator having a complicated structure increases the number of manufacturing steps and a manufacturing cost, and an inflator having an increased volume causes inconvenience due to a relationship with an arrangement space, it is necessary to avoid the complication of the inflator structure and the increase of the container.

However, with respect to the inflator for inflating type safety system of a vehicle which activates an air bag effectively, namely which not only inflates the air bag to a predetermined size in a predetermined time but also secures an operation reliability or an activation safety if required, and that facilitates manufacturing, there is still a room for development.

### Disclosure of the Invention

An object of the present invention is to provide an inflator for inflating type safety system having a simple structure and realizing reduction in size and weight, in which, even though a simple structure, a rupturable plate can be securely ruptured in order to securely discharge a gas for inflating an air bag and even when a gas generating agent was used, a flame or a gas generated by combustion of a gas generating agent can further be utilized without discharging a residue generated by combustion thereof outside a housing, and, an air bag system using the same.

The present invention provides an inflator which can discharge a gas for inflating an air bag efficiently, and can utilize a flame or a gas generated by combustion thereof even when using a gas generating agent, and wherein a flow path ("a first flow path" shown hereinafter) for guiding an activation energy of an igniter starting activation of the inflator and a flow path ("a second flow path" shown hereinafter) for guiding a gas for inflating an air bag are formed different to improve a reliability of the inflator at activation, and a rupturable plate closing the first flow path and the second flow path is interposed between two retainers defining both the flow paths to be fixed easily and securely so that an energy generated by activation of the igniter can be transmitted to the rupturable plate efficiently.

That is, the inflator according to the present invention is an inflator for inflating type safety system of a vehicle, provided with a pressurized medium space charged with a pressurized medium and an igniter chamber partitioned from the pressurized medium in an inflator housing having a gas discharging port, wherein a first passage for guiding an activation energy of an igniter and a second passage for guiding the pressurized medium to the gas discharging port are defined outside and inside two retainers arranged adjacent to each other in the axial direction and having a cylindrical peripheral wall portion, and a rupturable plate for sealing the pressurized medium space is interposed between the two retainers adjacent to each other in the axial direction.

The inflator of the present invention is formed to rupture the rupturable plate by an activation energy of the igniter, namely a flame, a gas or an impact wave generated by activation of the igniter, and to be activated. By rupturing the rupturable plate due to the activation energy of the igniter in this manner, an interior structure of the inflator can be made simpler and lighter in weight.

Then, the first passage for guiding an activation energy of the igniter is closed by a portion (hereinafter, referred to as a first rupturable portion) of the rupturable plate existing in the first passage and a periphery of the first rupturable plate is held by two retainers having a cylindrical peripheral wall portion, and therefore, when an activation energy of the igniter is received, the first rupturable portion is prevented from deforming and bulging toward the opposite side to the igniter by the retainers, and when further actuation energy is received, the first rupturable portion is securely ruptured in the vicinity of inner peripheral edges of the retainers blocking bulging of the first rupturable portion. That is, by limiting deforming or bulging of the entire rupturable plate toward the pressurized medium accommodating chamber with the retainers, the first rupturable portion can be securely broken at activation of the igniter.

As described above, since the inflator according to the present invention is constituted such that deforming or bulging of the rupturable plate is suppressed by the retainers at a time of actuation and the rupturable plate is ruptured by an activation energy of the igniter, even a rupturable plate which does not have a fragile portion such as a notch or the like can also be used as the rupturable plate. By using the rupturable plate which does not have a fragile portion such as notch or the like, a manufacturing cost can be suppressed, which is desirable.

Therefore, according to the present invention, an inflator in which the number of welded portions in the retainers can be reduced and the retainers are ruptured securely by activation energy of the igniter without providing a fragile portion in the rupturable plate can be realized. In this case, in order to rupture the first rupturable portion more securely, it is desirable that the igniter is provided oppositely to the first rupturable portion and no obstacle exists between them.

The two retainers holding the above-described rupturable plate are formed to have cylindrical peripheral wall portions, and the rupturable plate can be held between both the retainers by providing the retainers axially adjacent to each other. In this case, either one retainer exists in the pressurized medium space defined by the rupturable plate and the other retainer exists outside the pressurized medium space.

Further, desirably, the first passage and the second passage are provided concentrically and both the passages are defined by the retainers provided with cylindrical peripheral wall portions. By arranging the passages in this manner, a compact inflator can be realized and further the first passage and the second passage can be closed by a single member (the rupturable plate), and thus manufacturing can be made easier. If the rupturable plate is formed integrally such that a second rupturable portion exists to surround a periphery of the first rupturable portion, the rupturable plate can be manufactured easily, and consequently reduction in manufacturing cost can be achieved.

By defining the first passage and the second passage by the retainers, the first passage is provided inside the retainers and the second passage is provided outside the same. Both the passages are defined by the two retainers without air ventilation therebetween. Thereby, even when the igniter is activated, almost all activation energy thereof acts for rupturing the rupturable plate without flowing into the second passage and gases in the first and second passages during inflator actuation do not interfere with each other, so that an inflator actuated securely can be obtained.

The two retainers adjacent to each other in the axial direction can be realized as a first retainer existing outside the pressurized medium accommodating chamber and a second retainer existing inside the pressurized medium accommodating chamber. In this case, the rupturable plate can be held between the first retainer and the second retainer.

If the first retainer is disposed such that a distal end portion of the igniter is surrounded circumferentially by an axial one end portion thereof and the other end thereof contacts the rupturable plate, all activation energy generated by activation of the igniter is led to the rupturable plate to securely rupture the rupturable plate, which is desirable.

It is desirable that the first retainer which guides activation energy of the igniter is formed to have an inclining portion in which the inner diameter is getting smaller toward the rupturable plate. By forming the retainer in this manner, activation energy of the igniter can be concentrated to rupture more securely the rupturable plate.

Further, by providing an end portion closing member constituting a portion of the inflator housing at an axial end portion of the housing, defining an igniter chamber inside the end portion closing member, and forming gas discharging ports penetrating radially the end portion closing member, assembling of the inflator can be facilitated. In this case, it is preferable that a peripheral edge portion of the rupturable plate is fixed to the end portion closing member by welding or the like.

The inflator of the present invention is preferably a hybrid inflator in which one or two combustion chambers for accommodating a gas generating agent are provided inside the housing. The combustion chamber can be provided either inside or outside the pressurized medium space, but desirably, the combustion chamber is provided in the pressurized medium space in order to effectively utilize a combustion gas or heat generated by combustion of the gas generating agent. When the combustion chamber is provided inside the pressurized medium space, the first passage can be provided between the igniter chamber and the combustion chamber.

In the hybrid inflator, when the igniter is activated, activation energy thereof ruptures a portion (the first rupturable portion) of the rupturable plate existing in the first passage to reach the inside of the pressurized medium space and ignites and burns the gas generating agent in the combustion chamber existing in the space.

In this series of operations, since the rupturable plate is held by the two retainers in the inflator of the present invention, when the first rupturable plate is ruptured to be absent between the retainers no longer, a clearance corresponding to the thickness of the rupturable plate (a communicating space) is formed at the place (i.e., an abutment portion of the retainers). When such a clearance is generated, a combustion gas and a combustion residue of the gas generating agent flows out into the second passage through the clearance (hereinafter, referred to as "short-pass").

In view of the above, in the hybrid inflator according to the present invention, it is desirable to provide a passage closing member which is moved by a pressure in the pressurized medium space at actuation to close the communicating space of the first passage and the second passage, obtained between the retainers after the rupturable plate is ruptured. Thereby, a combustion gas and a combustion residue are prevented from short-passing to the second passage from the clearance formed between the retainers. Particularly in the hybrid inflator, since the interior of the housing is temporarily under a high pressure by combustion of the gas generating agent, an effect obtained by closing the first passage by the passage closing member due to the pressure and preventing communication between the passages at the clearance between the retainers is effective.

In order to close the communicating space between the first passage and the second passage after the rupturable plate is ruptured, desirably, the first passage in the combustion chamber side is closed rather than the communicating space. For this reason, it is desirable that the passage closing member is formed to have a size, a shape and a mass such as to be moved by a pressure inside the pressurized medium space activated at actuation of the inflator and to be capable of closing at least the first passage. As such a passage closing member, for example, a metal ball, an substantially conical metal member or the like can be used, and it is especially desirable that a shape of the member is a ball, because it can close the first passage securely regardless of the orientation of the member after moved.

The passage closing member is disposed inside the pressurized medium accommodating space, and more desirably in the rupturable plate side in the combustion chamber. By disposing the member in this manner, the passage closing member receives a pressure of a combustion gas generated by combustion of the gas generating agent or a pressure inside the pressurized medium space increased by the combustion gas and is moved in the direction to the clearance formed between the retainers to close the same.

In particular, if the gas discharging port and the clearance formed between the retainers are close to each other, the combustion residue passing through the clearance is discharged directly from the gas discharging port to the outside of the housing, and therefore, it is essential to close the clearance by the passage closing member.

In order to close the first passage by the passage closing member, for example, among two retainers forming the first passage, in a retainer (the second retainer) existing inside the pressurized medium accommodating chamber before activation in the rupturable plate side, a bent portion for forming an opening smaller than an inner diameter of the cylindrical peripheral wall portion thereof may be provided, and the bent portion and the passage closing member may be pressed against each other. Thereby, the combustion gas generated inside the combustion chamber is sealed between the bent portion and the passage closing member so that it is prevented from short-pass from the clearance between the retainers toward the second passage.

As a result, all the gas for inflating an air bag, including the combustion gas of the gas generating agent, is discharged from the gas discharging ports through the second passage. Thus, a hybrid inflator in which a combustion gas is not discharged directly can be provided. Further, as all the operating gas passes through the second passage, the combustion product (hereinafter, referred to as a combustion residue) except the gas generated by combustion of the gas generating agent strikes against an inner wall of the housing or the like and is removed from the operating gas at the time of being discharged from the combustion chamber to pass through the second passage, so that a possibility that the combustion residue discharged from the gas discharging ports can be suppressed as much as possible.

In particular, in order to make the combustion residue generated by combustion of the gas generating agent remain in the housing more effectively, it is desirable to provide many flow direction changing points of operating gas flow. For example, when a through hole for discharging combustion gas from the combustion chamber is formed on a peripheral surface of the cylindrical container defining the combustion chamber, it is desirable that the through hole is formed in a direction perpendicular to the inner surface of the housing or at least two flow direction changing portions for changing a direction of a gas flow is provided in a passage of the combustion gas from the combustion chamber to the gas discharging port.

Further, in order to ignite the gas generating agent more securely, it is desirable that a transfer charge ignited and burnt by the activation energy of the igniter is disposed at any position in the combustion chamber. In this case, in order to improve an ignition of the transfer charge ignited by the igniter, it is desirable that no obstacle to movement of the activation energy of the igniter, such as a passage closing member exists between the rupturable plate and the transfer charge.

In the inflator of the present invention constituted as described above, since all the gases flowing inside the housing flows in one direction and a flow of one gas is not disturbed by the flow of another gas, the gas flows in the housing are not disturbed and flow in one direction. As a result, the gas for inflating an air bag can be discharged efficiently.

And when the inflator of the preset invention is a hybrid inflator, by providing the first passage and the second passage separately, a combustion flame or a combustion gas of the gas generating agent can be utilized further effectively and a flame or hot gas generated by combustion of the gas generating agent is not directly discharged, so that activation safety also becomes further preferable. In particular, since the first passage for guiding activation energy of the igniter is provided inside two retainers axially adjacent to each other and it is extended to the interior of the pressurized medium space by the two retainers (particularly by the second retainer), the activation energy of the igniter is guided even in the pressurized medium space. As a result, it is convenient to ignite the gas generating agent disposed inside the pressurized medium space. That is, such a features of the present invention that the rupturable plate is held by two retainers and either one of the retainers exists in the pressurized medium space is especially suitable for the hybrid inflator, because the activation energy of the igniter can be guided into the combustion chamber in the pressurized medium space.

As the pressurized medium which can be used in the present invention, a conventionally known material can be used, and one having a composition which comprises an inert gas such as argon, helium or the like (nitrogen is also included in the inert gas in the present invention) and that does not include oxygen substantially can be used. In this case, the argon works to promote the thermal expansion of the pressurized medium. It is preferable to contain helium in the pressurized medium since the leakage of the pressurized medium can be detected easily, and consequently distribution of imperfect products can be prevented. A charging pressure of the pressurized medium is preferably 10,000 to 70,000 kPa and more preferably, 30,000 to 60,000 kPa.

Further, as the gas generating agent used when the inflator of the present invention is the hybrid inflator, a conventionally known gas generating agent can be used. Incidentally, in order to remove the combustion residue (the combustion product other than a gas) more effectively, it is desirable to use a gas generating agent which generates a combustion product having a melting point higher than the discharging temperature of the gas generated by combustion of the gas generating agent. By relating the discharging temperature of the gas generated from the gas generating agent and the melting point of the combustion residue contained in the combustion gas to each other, the generation of a massive (slag-like) combustion residue can be promoted. By making a gas including the slag-like combustion residue strike against an inner surface of the housing or the like, the combustion residue can be removed from the gas. In particular, when the second passage is provided to surround the first passage and the second passage is formed to allow a gas to pass, the combustion residue included in the gas strikes against a wall surface of the second passage to be collected, which is desirable.

The discharged gas temperature of the gas generating agent can be obtained from an tank internal pressure (actually measured value), an amount of generated gas, and a specific heat of the generated gas generally when the gas generating agent is burnt inside a tank having a predetermined volume. When the melting point of the residue becomes sufficiently higher than the discharged gas temperature (not less than 110°C, preferably not less than 500°C), the combustion residue is easily solidified and agglomerated (slag-like), so that it remains in the inflator and is suppressed from being discharged out of the inflator.

As the gas generating agent which can be used in the present invention, for example, it is possible to use one including fuel and an oxidizing agent, or fuel, an oxidizing agent and a slag-forming agent, being mixed with a binder if required, and formed into a desired shape. If such a gas generating agent is used, a gas generated by combustion of the agent can be used for inflating and developing the air bag together with the pressurized medium. Particularly when the gas generating agent including the slag-forming agent is used, since it becomes easier to form a slag, an amount of mist-like combustion residue discharged from the inflator can be largely reduced. However, when an amount of the gas generating agent to be charged is small and an amount of the residue to be generated is small, the slag-forming agent may not be used in view of a gas generating efficiency.

Preferably, the fuel can be one or two or more selected from the group constituting guanidine derivatives such as nitroguanidine (NQ), guanidine nitrite (GN), guanidine carbonate, amino nitro guanidine, amino guanidine nitrate, amino guanidine carbonate, diamino guanidine nitrate, diamino guanidine carbonate, and triamino guanidine nitrite. Furhter, as fuel, one or two or more selected from the group consisting of tetrazole and tetrzole derivatives can be used.

Preferably, the oxidizing agent can be one or two or more selected from the group consisting of strontium nitrate, potassium nitrate, ammonium nitrate, potassium perchrolate, copper oxide, ferrous oxide, a basic copper nitrate.

Preferably, the slag-forming agent can be one or two or more selected from the group consisting of acid clay, talc, bentonite, diatomaceous earth, kaolin, silica, alumina, sodium silicate, silicon nitride, silicon carbide, hydrotalsite, and a mixture thereof.

Preferably, the binding agent can be one or two or more selected from the group consisting of sodium salt of carboxymethylcellulose, hydroxyethyl cellulose, starch, polyvinyl alcohol, guar gum, microcrystal cellulose, polyacrylamide and calcium stearate.

When the pressurized medium and the gas generating agent having the above-described compositions are used, it is preferable that a molar ratio (A/B) between an amount (A mol) of the pressurized medium and an amount (B mol) of gas generated due to combustion of the gas generating agent is adjusted to 0.2 to 10, and more preferably 0.4 to 4.

As described above, the charging amount of the pressurized medium can be reduced by adjusting the molar ratio between an amount of pressurized medium and an amount of a gas generated by combustion of the gas generating agent. Therefore, even when a volume of the inflator housing is reduced by making the pressurized medium space smaller (i.e., even when the length and/or width (diameter) of the housing is reduced), it is possible to maintain the pressure at the same level as that before the volume is reduced, without increasing the charging pressure (=internal pressure of the pressurized medium) of the pressurized medium. In the present invention, when the inflator is a hybrid inflator, a weight ratio (X/Y) of a weight (X) of the pressurized medium to a weight (Y) of the gas generating agent is preferably 0.1 to 7, and more preferably 0.5 to 5.

The present invention provides an inflator for inflating type safety system with a simple structure in which a gas for inflating an air bag can be securely discharged and, even when a solid gas generating agent burnt to generate a gas is used, a flame or a gas generated by combustion of a gas generating agent can further be efficiently used without discharging a residue produced by combustion thereof to the outside of the housing, and that realizes reduction in size and weight with a simple structure, and also provides an air bag system using the same.

### Brief Description of the Drawings

Fig. 1 is an axial sectional view showing an embodiment of a hybrid inflator.
Fig. 2 is an axial sectional view showing a state of the hybrid inflator in Fig. 1 after activation starts.
Fig. 3 is a sectional view of a principal portion showing an activation starting state of the hybrid inflator.
Fig. 4 is a sectional view of the principal portion showing an activation starting state of the hybrid inflator. and
Fig. 5 is a sectional view of the principal portion showing an activation starting state of the hybrid inflator.

### Description of Numerals

1 inflator housing
2 pressurized medium space
3 combustion chamber
4 gas generating agent
5 igniter
9 first retainer
10 second retainer
12 rupturable plate
13 first rupturable portion
14 second rupturable portion
15 first passage
16 second passage
17 communicating space
18 metal ball
19 bent portion

### Preferred Embodiments of the Invention

An embodiment of the present invention will be explained below with reference to the drawings.

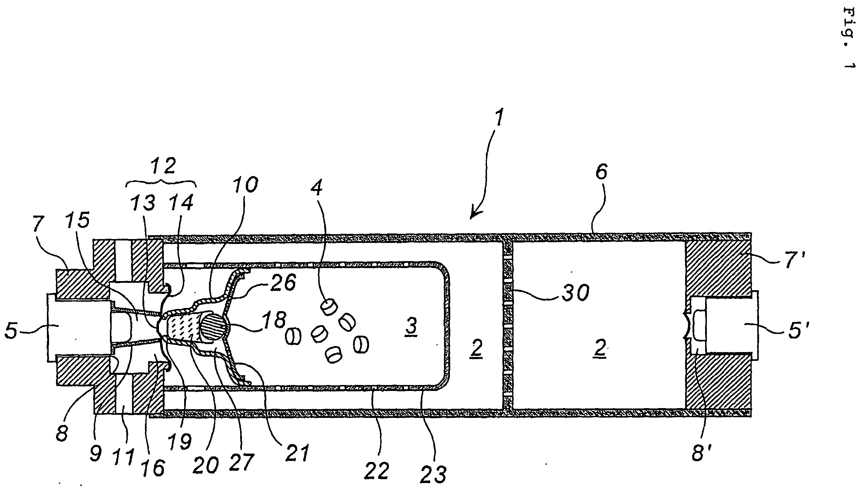

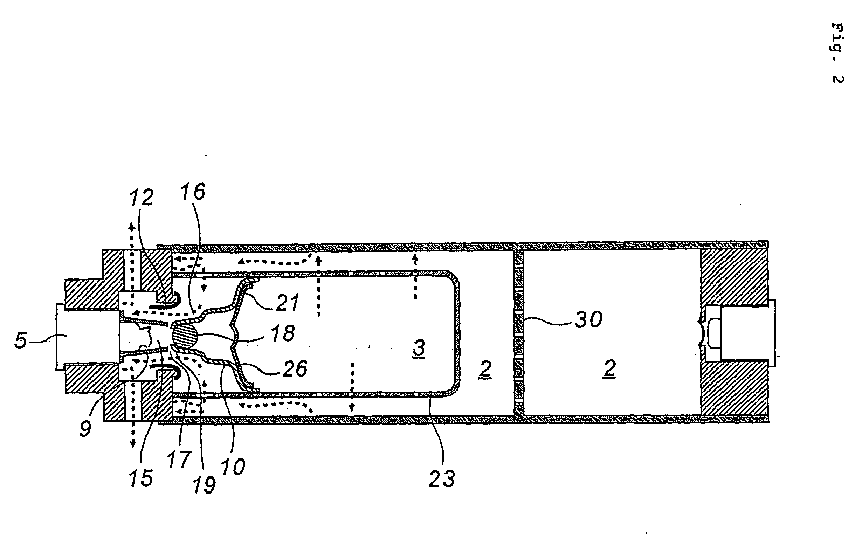

Fig. 1 is an axial section showing a preferred embodiment of an inflator according to the present invention, and Fig. 2 is an axial section showing a state of the inflator after activation starts.

An inflator according to the present embodiment is an aspect of a hybrid inflator utilizing heat or a gas generated by combustion of a solid gas generating agent 4 at a time of activation, and an example of a dual type (a multi-stage type) hybrid inflator provided with two igniters 5 activated independently is shown.

In the hybrid inflator, a pressurized medium space 2 charged with a pressurized medium is provided in a cylindrical inflator housing 1, a combustion chamber 3 accommodating a gas generating agent 4 is provided inside the pressurized medium space 2, and igniters 5, 5' are arranged at both axial end portions of the inflator housing 1.

The inflator housing 1 comprises a cylindrical member 6, which has a strength to withstand increase in pressure generated inside the pressure chamber (namely, the pressurized medium space 2), and two end portion closing members 7, 7' for closing end openings thereof, and igniter chambers 8, 8' for accommodating the igniters 5, 5' are provided inside the respective end portion closing members 7, 7'. Between two end portion closing members 7, 7', the end portion closing member 7 (hereinafter, referred to as a first end portion closing member 7) which is positioned in the side (namely, on the left side of the drawing) where retainers 9, 10 described later are provided is provided with gas discharging ports 11 radially penetrating through the first end portion closing member 7.

The pressurized medium space 2 provided inside the inflator housing 1 is charged with an inert gas such as argon, helium or the like to serve as a pressure chamber, and the pressure chamber is closed by a rupturable plate 12 existing at an end surface of the first end portion closing member 7 in the pressurized medium space 2 side to be maintained in an air tight state. A partition wall 30 provided to axially divide the pressurized medium space into two is disposed inside the pressurized medium space 2. The partition wall 30 is provided with plural through holes for communicating the divided spaces with each other.

A cylindrical container 23 provided on its peripheral surface with plural through holes 22 is disposed inside the pressurized medium space 2, and it is charged with the gas generating agent 4 to be the combustion chamber 3. A flame, heat, combustion gas and the like generated by combustion of the gas generating agent 4 are discharged from the through holes 22 of the cylindrical container 23 to inflate the pressurized medium. As the gas generating agent 4, a conventionally known material can be used, but, specially preferably, a material which does not produce a product (liquid type, solid type, semi-solid type or the like) other than the gas at activation, or a material which generates a combustion product (combustion residue) removed by making an operating gas strike against an inner surface of the housing 1 is suitably used. Especially, the cylindrical container 23 provided with the through holes 22 is arranged to face an inner surface of the cylindrical member 6 constituting the housing 1, and the through holes 22 are formed perpendicularly to the inner surface of the cylindrical member 6, and thereby, the combustion residue discharged from the through holes 22 collides against the inner surface of the cylindrical member 6 to be removed. Further, in this embodiment, the gas, which has changed its flow direction after striking against the inner surface of the housing 1, strikes against the first end portion closing member 7 this time to change its flow direction. That is, the inner surface of the cylindrical member 6 and the first end closing member 7 constituting the housing 1 serve as the direction changing portions, and the combustion residue included in the gas is removed by the change of the flow direction.

Two retainers 9, 10 are provided to be connected from the igniter (hereinafter, referred to as a first igniter 5) provided in the first end portion closing member 7 toward the inside of the housing 1. The two retainers 9, 10 are both provided with cylindrical peripheral wall portions and a rupturable plate 12, which hermetically closes the pressurized medium space 2, is interposed between the retainers 9, 10 adjacent to each other in the axial direction. In this embodiment, the retainer existing outside the pressurized medium space 2, namely, existing nearer to the igniter 5 than the rupturable plate 12 is defined as a first retainer 9 and the retainer existing inside the pressurized medium is defined as a second retainer 10.

A first passage 15 for guiding actuation energy (a flame, a gas, an impact wave and the like) of the igniter 5 is secured inside the first retainer 9 and the second retainer 10, and, in the outside thereof, a second passage 16 for guiding an operating gas for inflating an air bag is defined by the retainers and the inner peripheral wall of the first end portion closing member 7. That is, the first passage 15 and the second passage 16 are defined by the two retainers 9, 10.

In this embodiment, particularly, the first retainer 9 for guiding the activation energy of the igniter 5 to the rupturable plate 12 is formed as an inclining portion in which the inner diameter of its peripheral wall (a cylindrical peripheral wall portion) formed cylindrically is getting smaller from the igniter 5 toward the rupturable plate 12. Thereby, the activation energy of the igniter 5 can be concentrated to more securely rupture the rupturable plate 12. The inclining portion may be provided only in the vicinity of a portion contacting with the rupturable plate in the first retainer 9.

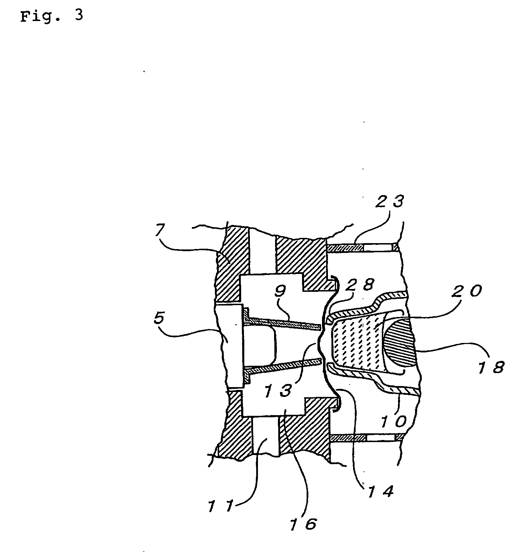

As the rupturable plate 12 sealing the pressurized medium space 2, one metal plate formed in a circular shape is used, and the first passage 15 and the second passage 16 are closed by the one metal plate (the rupturable plate 12). Then, since the rupturable plate 12 formed in one plate piece is held between the two retainers 9, 10, it is prevented from bulging (deforming) toward the pressurized medium space at the time of receiving the actuation energy of the igniter 5, even if it is not welded at a periphery of the first passage 15. And, if a break as a notch is not formed, the rupturable plate 12 can securely be ruptured at a time of activation of the igniter 5. In order to prevent expansion of the rupturable plate 12 at the time of receiving the actuation energy of the igniter 5 and to rupture the rupturable plate securely, it is desirable that the inner diameter (an inner diameter of the first passage 15) of a portion contacting the rupturable plate 12 in the second retainer is approximately equal to the inner diameter (the inner diameter of the first passage 15) of a portion contacting the rupturable plate 12 in the first retainer, however, the inner diameter of a portion contacting the rupturable plate in the second retainer can be larger by the thickness of the portion contacting the rupturable plate in the first retainer, as shown in Fig. 3.

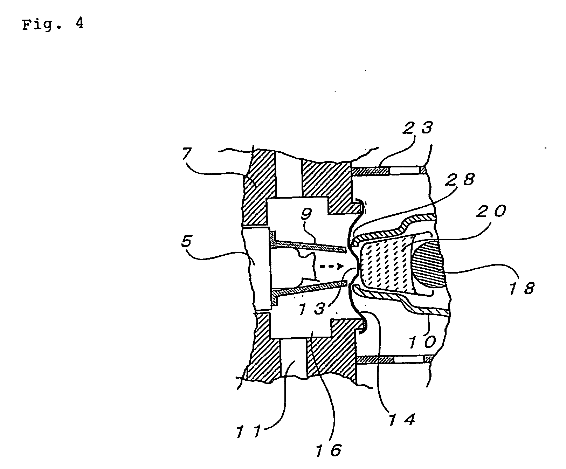

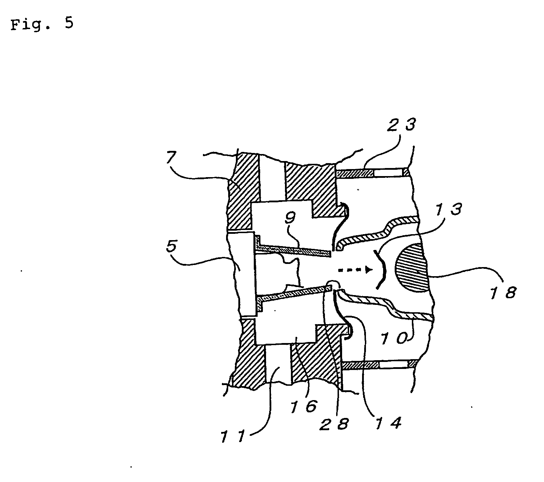

At this time, as shown in Fig. 3, the rupturable plate 12 is deformed to be pressed against the first retainer 9, receiving a pressure of the pressurized medium. In this state, when the igniter is activated, an activation energy thereof overcomes the pressure of the pressurized medium, so that the first rupturable portion 13 of the rupturable plate 12 deforms to bulge toward the combustion chamber 3 side (namely, toward the pressurized medium space side) as shown in Fig. 4. At this time, the rupturable plate 12 comes in contact with an edge portion 28 of the second retainer 10 so that the edge portion 28 acts to prevent deformation of the entire rupturable plate 12. Furthermore, when energy from the igniter is applied to the first rupturable portion 13, the first rupturable plate 13 is sheared at the edge portion 28 to be cut off. At this time, the first rupturable portion 13 is cut off almost as a whole, as shown in Fig. 5. In this case, a shape of a portion to be cut off may be jaggedly cut off mainly at the portion corresponding to the edge portion 28 in the rupturable plate.

A rupturable plate portion (a second rupturable portion 14) which receives a pressure of the pressurized medium and exits inside the second passage 16 is also ruptured due to the influence of the rupture of the first rupturable portion 13. Thereby, a communicating space 17 such as shown in Fig. 2 may occur at butting portions of the retainers 9, 10 holding the rupturable plate 12.

In view of the above, in the inflator shown in this embodiment, as shown in Fig. 2, a passage closing member (a metal ball 18) which moves due to a pressure inside the pressurized medium space 2 at activation to close the communicating space 17 between the first passage 15 and the second passage 16 after rupture of the rupturable plate 12 is disposed. The metal ball 18 is provided in the rupturable plate 12 side inside the combustion chamber 3 before activation of the inflator, as shown in Fig. 1, and it receives a pressure at a time of combustion of the gas generating agent 4 or a pressure of the activated pressurized medium and moves in the direction to close the communicating space 17 after activation of the inflator, as shown in Fig. 2.

A bent portion 19 which tightly contact the moved metal ball 18 to close the first passage 15 is provided nearer to the pressurized medium space 2 than the communicating space 17 in the first passage 15 (specifically, inside the second retainer 10), and a short-pass of the operating gas or the combustion residue from the first passage 15 to the second passage 16 is prevented by pressing the bent portion 19 and the metal ball 18 against each other. Incidentally, a chain line shows a flow of a gas in Fig. 2.

A transfer charge 20 which is ignited and burnt by activation energy of the igniter 5 is disposed inside the first passage 15 and the metal ball 18 is pressed and supported together with the transfer charge 20 by and a supporting member 21 defining the combustion chamber 3. A recess for receiving part of the metal ball 18 is formed in the supporting member 21, and the metal ball 18 is received in the recess and is prevented from moving before activation. The metal ball 18 is not in contact with the second retainer 10 to be directly supported by the second retainer 10, and a clearance 27 is provided between the metal ball 18 and the second retainer 10. The clearance 27 serves to lead a flame of the transfer charge 20 to the combustion chamber 3. Incidentally, in order to lead the flame of the transfer charge 20 into the combustion chamber 3, plural through holes 26 are formed in the supporting member 21 or the supporting member 21 is formed by using a wire mesh.

An operation of the inflator according to this embodiment will be described. When the igniter 5 is activated upon receipt of an activation signal, activation energy is generated and it reaches the first rupturable portion 13 through the inside of the first retainer 9 (the first passage 15) thereby rupturing the same. At this time, the second rupturable portion 14 also receives a pressure of the pressurized medium and is ruptured, so that the pressurized medium space 2 is put in communication with the outside of the housing 1 via the second passage 16 and the gas discharging ports 11. Almost simultaneously with rupture of the second rupturable portion 14, the activation energy of the igniter 5 ignites the transfer charge 20 inside the second retainer 10 and a flame thereof passes inside the second retainer 10 (the first passage 15) to ignite and burn the gas generating agent 4 inside the combustion chamber 3. The pressure inside the pressurized medium space 2 increases due to combustion of the gas generating agent 4 and, simultaneously therewith, the metal ball 18 receives a combustion gas of the gas generating agent 4 or a pressure of the pressurized medium to move in the direction in which the rupturable plate 12 existed and closely contact the bent portion 19 of the second retainer 10 to close the first passage 15. Thereby, outflow of the combustion gas, the combustion residue and the pressurized medium from the communicating space 17, which is formed between the retainers 9, 10, to the second passage 16 is blocked. As a result, all the combustion gas generated in the combustion chamber 3 and the pressurized medium (operating gas) passes through the second passage 16 to be discharged from the gas discharging ports 11. Since the flow-direction changing portion (the inner surface of the cylindrical member 6 and the first end portion closing member 7) for changing a flow direction of a gas is provided in the passage of the operating gas inside the housing 1, the combustion residue contained in the gas is removed so that a clean gas is discharged. Further, since all of the combustion gas passes through the interior of the pressurized medium space 2, heat or the combustion gas due to combustion of the gas generating agent 4 can effectively be utilized.

In the inflator housing 1, the igniter 5' fixed to the end portion closing member 7' provided oppositely to the first end portion closing member 7 is activated properly if required, and when activated, the igniter 5' is activated simultaneously with the first igniter 5 or with a slight delay.

Incidentally, in the present embodiment, the inflator with two igniters 5, 5' is described, however the inflator according to the present invention can further employ a structure having only a left half portion in Fig. 1, namely, a single type structure constituted with only a left half portion (in the side in which the combustion chamber exists) divided from the partition wall 30 provided inside the cylindrical portion of the housing. In this case, the inflator can be formed to have a structure, which is closed by a member with no hole for closing an end portion, instead of the partition wall 30. Furthermore, even in a structure without using the generating agent 4, it is possible to rupture the first rupturable portion 13 and the second rupturable portion 14 by a gas, heat, an impact wave or the like generated by activation of an igniter by the structure in which the first retainer 9 and the second retainer 10 hold the both sides of the ruptrable plate. In this case, since no residue occurs, a metal ball is not required.

An air bag system of the present invention can be manufactured by incorporating the above-described hybrid inflator. That is, it is an air bag system provided with activation-signal outputting means comprising an impact sensor and a control unit, and a module including a module case accommodating a hybrid inflator and an air bag. The hybrid inflator is connected to the activation-signal outputting means (the impact sensor and the control unit) at the igniters 5, 5' existing at both ends of the housing 1 and the inflator is connected and fixed in the module case mounted with an air bag by screwing a stud bolt. Then, in the air bag system having such a structure, it is possible to adjust an amount of gas generation and an inflating speed of the air bag according to the magnitude of an impact by properly setting activation-signal outputting conditions in the activation-signal outputting means.

The hybrid inflator of the present invention can be applied to various inflators such as an inflator for an air bag for a driver side, an inflator for an air bag for a passenger side next to the driver, an inflator for a side air bag, an inflator for a curtain air bag, or the like.

## Claims

1. An inflator for inflating type safety system for a vehicle, provided with, in an inflator housing having a gas discharging port, a pressurized medium space charged with a pressurized medium and an igniter chamber partitioned from the pressurized medium,
wherein a first passage for guiding an activation energy of an igniter and a second passage for guiding the pressurized medium to the gas discharging port are defined in the outside and the inside of two retainers having a cylindrical peripheral wall portion arranged axially adjacent to each other, and
a rupturable plate for sealing the pressurized medium space is held between the two retainers axially adjacent to each other.

2. An inflator according to claim 1, wherein the first passage is defined inside the second passage, and the first passage and the second passage are closed by an integrated single rupturable plate.

3. An inflator according to claim 1 or 2, wherein the rupturable plate comprises a first rupturable portion closing the first passage and a second rupturable portion closing the second passage, and the igniter accommodated in the igniter chamber is positioned oppositely to the first rupturable portion.

4. An inflator according to claim 3, wherein the first rupturable portion receives the activation energy of the igniter directly to be ruptured.

5. An inflator according to any one of claims 1 to 4, wherein the rupturable plate is constituted such that deforming or budging of the entire rupturable plate toward the pressurized medium accommodating chamber due to the activation energy of the igniter is limited by the retainers.

6. An inflator according to any one of claims 1 to 5, wherein the two retainers axially adjacent to each other are a first retainer existing outside the pressurized medium accommodating chamber and a second retainer existing inside the pressurized medium accommodating chamber, and the rupturable plate is held between the first retainer and the second retainer.

7. An inflator according to claim 6, wherein the first retainer circumferentially surrounds a distal end portion of the igniter by its axial one end portion, and makes the other portion contact with the ruputurable plate to be arranged in a housing.

8. An inflator according to any one of claims 1 to 7, wherein an end portion closing member constituting a portion of the housing is provided at an axial one end portion of the inflator housing, and the igniter chamber is defined and provided inside the end portion closing member, and gas discharging ports radially penetrating the end portion closing member are formed in the end portion closing member.

9. An inflator according to claim 8, wherein the rupturable plate is fixed at its peripheral portion to the end portion closing member.

10. An inflator according to any one of claims 1 to 9, wherein a combustion chamber accommodating a gas generating agent ignited and burnt by the activation energy of the igniter, and a passage closing member which moves due to a pressure inside the pressurized medium space at activation to close a communicating space between the first passage and the second passage after the rupturable plate is ruptured are provided inside the inflator housing.

11. An inflator according to claim 10, wherein the combustion chamber is provided inside the pressurized medium accommodating space, the first passage is provided between the igniter and the combustion chamber, and the passage closing member is provided between the rupturable plate and the combustion chamber.

12. An inflator according to claim 10 or 11, wherein the combustion chamber is provided inside a cylindrical container disposed inside the pressurized medium space, and plural through holes directing perpendicularly to an inner surface of the housing are formed on a peripheral surface of the cylindrical container.

13. An inflator according to claim 12, wherein all combustion gas generated inside the combustion chamber is discharged from the through holes to reach the gas discharging port.

14. An inflator according to any one of claims 10 to 13, wherein at least two flow direction changing portions for changing a flow direction of a gas are provided in a passage of the combustion gas generated in the combustion chamber from the combustion chamber to the gas discharging port.

15. An inflator according to any one of claims 10 to 14, wherein the second rupturable plate is ruptured by at least one of a pressurized medium pressure and combustion gas pressure of the gas generating agent.

16. An inflator according to any one of claims 10 to 15, wherein a bent portion forming an opening smaller than an inner diameter of a cylindrical peripheral portion is provided at an end portion in the rupturable plate side of a retainer (a second retainer), among the two retainers, existing inside the pressurized medium accommodating chamber and the bent portion is formed in a shape to be pressed by the passage closing member and close the communicating space.

17. An inflator according to any one of claims 10 to 16, wherein a transfer charge ignited and burnt by activation energy of the igniter is disposed inside an cylindrical peripheral wall of a retainer (a second retainer), among the two retainers, existing inside the pressurized accommodating chamber, and the transfer charge is pressed and supported by a supporting member defining the combustion chamber together with the passage closing member.

18. An inflator according to any one of claims 10 to 17, wherein the passage closing member is a metal ball, the metal ball is disposed in the combustion chamber side inside a retainer (a second retainer), among the two retainers, existing in the pressurized medium accommodating chamber, and an inner diameter of a portion of the second retainer in the vicinity of the passage closing member is formed to be larger than an outer diameter of the metal ball at least before activation of the inflator.

19. An inflator according to any one of claims 1 to 18, wherein, among the two retainers, a retainer (a first retainer) exiting outside the pressurized medium accommodating chamber has an inclining portion which is gradually reduced in diameter toward an end portion thereof in the rupturable plate side.

20. An air bag system comprising activation-signal outputting means including an impact sensor and a control unit, and a module case accommodating an inflator according to any one of claims 1 to 19 and an air bag.
